# EUROPEAN PATENT SPECIFICATION

(11) **EP 2 546 118 B1**
(45) Date of publication and mention of the grant of the patent: **14.08.2019**
(21) Application number: 11753498.2
(22) Date of filing: 11.03.2011
(51) Int. Cl.: B60T 11/20, B60T 8/18, B60T 8/1755

(54) **BRAKING DEVICE AND VEHICLE**
BREMSVORRICHTUNG UND FAHRZEUG
DISPOSITIF DE FREINAGE ET VÉHICULE

(30) Priority: 12.03.2010 JP 2010056625
(43) Date of publication of application: 16.01.2013
(73) Proprietor: TOYOTA JIDOSHA KABUSHIKI KAISHA, Toyota-shi, Aichi-ken, 471-8571 (JP)
(72) Inventor: OSAKABE, Taro, Toyota-shi Aichi 471-8571 (JP); KANEKO, Takayuki, Toyota-shi Aichi 471-8571 (JP)
(74) Representative: Intès, Didier Gérard André
(86) International application number: PCT/JP2011/055840
(87) International publication number: WO 2011/111840

(56) References cited:
- EP-A1- 1 950 116
- JP-A- 2 028 046
- JP-A- 61 249 861
- JP-A- 2006 182 173
- JP-A- 2006 335 171
- JP-A- 2007 253 769
- JP-A- 2008 037 259
- US-A1- 2005 168 062

## Description

### Field

The present invention relates to a braking device which exerts a braking force during deceleration and a vehicle.

### Background

Vehicles such as automobiles are provided with a braking device such as a brake to decelerate and stop during traveling. The braking device decelerates and stops a vehicle by applying a load on a tire, a vehicle shaft, and a drive mechanism in a direction where rotation is suppressed.

Here, as an apparatus for controlling a braking force of a braking device, for example, Patent Literature 1 describes a travel control device of a vehicle in a vehicle steering control device which includes a roll rigidity variable means for changing roll rigidity of a vehicle and brake/drive force application means for applying a brake/drive force to wheels, wherein the travel control device is characterized by comprising control means which calculates, when abnormal adhesion, in which roll rigidity of a vehicle is different depending on a roll direction of the vehicle, is generated, a necessary yaw moment against an extra yaw moment applied to the vehicle based on an offset amount of the roll rigidity of the vehicle to the roll direction of the vehicle and controls a difference of brake/drive forces of right and left wheels so as to apply the necessary yaw moment to the vehicle. The device described in Patent Literature 1 can improve a linear traveling property by adjusting braking forces of the right and left wheels when necessary. Further, as a device which adjusts a braking force, there are also an ABS (Anti-lock Brake System) control and a VCS (Vehicle Control System) control.
JP 2006-182173 discloses a lane deviation prevention device.

### Citation List

### Patent Literature

Patent Literature 1: Japanese Patent Application Laid-open No. 2007-168694

### Summary

### Technical Problem

Here, a vehicle may be deflected in braking. That is, when a brake is applied, the vehicle may exhibit a behavior to stop while turning in a direction. Also in the case, the deflection of the vehicle can be suppressed by controlling a braking force by the device described in Patent Literature 1, the ABS control, and the VCS control.

However, since the control device described in Patent Literature 1 performs control based on a detected value, the same braking force is applied to the right and left wheels at the beginning of the control. Here, distances between the right and left wheels and a position of a center of gravity become a different distance. Accordingly, when the same braking force is applied to the right and left wheels, a rotation moment is generated and the vehicle is deflected.

An object of the present invention, which was made in view of the circumstances, is to provide a braking device capable of effectively suppressing deflection of a vehicle body in braking and a vehicle.

### Solution to Problem

A braking device is described that applies a braking force to a first tire and a second tire rotatably disposed to a vehicle body, includes a master cylinder including a first fluid pressure chamber and a second fluid pressure chamber that supply fluid pressure; a piston configured to apply an external force to the first fluid pressure chamber and the second fluid pressure chamber; a first hydraulic braking unit configured to apply a braking force to the first tire based on the fluid pressure supplied from the first fluid pressure chamber; and a second hydraulic braking unit configured to apply a braking force to the second tire based on the fluid pressure supplied from the second fluid pressure chamber, wherein when the master cylinder is applied with the external force from the piston, the pressure of the second fluid pressure chamber and the pressure of the first fluid pressure chamber becomes different pressure.

In order to solve the above mentioned problem and achieve the object, a vehicle according to claim 1 is provided.

Here, it is preferable that the braking device sets the braking force on the side near to the center of gravity and the braking force on the side far from the center of gravity to a proportional relation.

Further, it is preferable to further include a first tire rotatably disposed on the side of the vehicle body far from the center of gravity and a second tire rotatably disposed on the side of the vehicle body near to the center of gravity, wherein the braking device preferably includes a master cylinder including a first fluid pressure chamber and a second fluid pressure chamber that supply fluid pressure, a first hydraulic braking unit configured to exert a braking force on the first tire based on fluid pressure supplied from the first fluid pressure chamber, and a second hydraulic braking unit configured to exert a braking force on the second tire based on fluid pressure supplied from the second fluid pressure chamber, and pressure of the second fluid pressure chamber is preferably configured to become higher than pressure of the first fluid pressure chamber.

Further, it is preferable that the master cylinder includes a first piston and a first cylinder that configure the first fluid pressure chamber, a first spring that supports the first piston, a second piston and a second cylinder that configure the first fluid pressure chamber, and a second spring that supports the second piston, the pressure of the second fluid pressure chamber is preferably made higher than the pressure of the first fluid pressure chamber based on at least one of spring loads of the first spring and the second spring, sliding resistances of the respective units, and areas of the first cylinder and the second cylinder.

Further, it is preferable that the first tire and the second tire are located forward in the traveling direction of the vehicle body.

Further, it is preferable to further include a first tire rotatably disposed on the side far from the center of gravity of the vehicle body and a second tire rotatably disposed on the side near to the center of gravity of the vehicle body, wherein the braking device preferably includes a first brake rotor that applies a braking force to the first tire, and a second brake rotor that applies a braking force to the second tire, and the second brake rotor preferably has a rotor diameter larger than that of the first brake rotor.

Further, it is preferable that the braking device calculates a braking force calculated to an input value input during braking so that a braking force on the side near to the center of gravity becomes larger than a braking force on the side far from the center of gravity, and the calculated braking force is preferably exerted on the vehicle body.

Further, the braking device sets the braking force on the side near to the center of gravity and the braking force on the side far from the center of gravity to a difference of braking forces in which a generated rotation moment is within a set range, based on a difference of braking forces calculated under a condition of a plurality of positions of the center of gravity. Advantageous Effects of Invention

The braking device and the vehicle according to the present invention achieves an effect that deflection of the vehicle body can be effectively suppressed in braking.

### Brief Description of the Drawings

FIG. 1 is a schematic view illustrating a schematic configuration of a vehicle having a braking device.
FIG. 2 is a schematic view illustrating a schematic configuration of a master cylinder of the braking device.
FIG. 3 is an explanatory view explaining a force exerting on a vehicle body in braking.
FIG. 4 is a graph illustrating an example of a relation between a first chamber fluid pressure and a second chamber fluid pressure.
FIG. 5 is a graph illustrating another example of the relation between the first chamber fluid pressure and the second chamber fluid pressure.
FIG. 6 is a graph illustrating another example of a relation between a rotation moment and a front braking force difference.
FIG. 7 is a graph illustrating another example of a relation between a rotor diameter and a braking force right/left difference.
FIG. 8 is a graph illustrating another example of a relation between a piston diameter and the braking force right/left difference.
FIG. 9 is a graph illustrating a relation between an output and an input.

### Description of Embodiment

The present invention will be explained below in detail referring to the drawings. Note that the present invention is not limited by an embodiment for carrying out the present invention (hereinafter, called an embodiment). Further, components in the embodiment include components that can be easily assumed by a person skilled in the art and substantially same components, that is, components within a so-called equivalent range. Further, the components disclosed in the embodiment can be appropriately combined. The embodiment of a vehicle according to the present invention will be explained below in detail based on the drawings. Note that the present invention is not limited by the embodiment.

### Embodiment

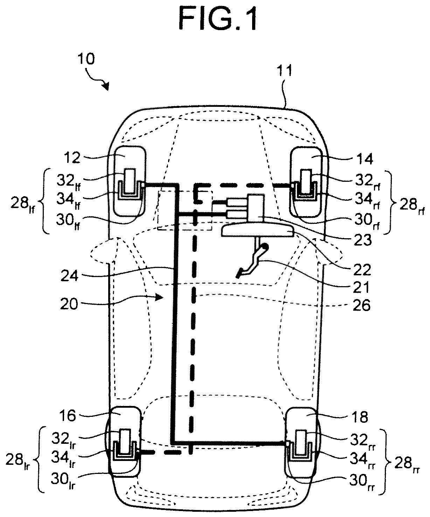

FIG. 1 is a schematic view illustrating a schematic configuration of a vehicle having a braking device. As illustrated in FIG. 1, a vehicle 10 has a vehicle body 11, a left front tire 12, a right front tire 14, a left rear tire 16, a right rear tire 18, and a braking device 20. Note that, although illustration is omitted, the vehicle 10 has various configurations necessary as the vehicle such as a drive source, a power transmission unit, an operation unit, and seats in addition to the above configurations.

The vehicle body 11 is a housing of the vehicle 10, that is, a so-called body. The drive source, the power transmission unit, the operation unit, the seats, and the like are disposed inside of the vehicle body 11.

The left front tire 12, the right front tire 14, the left rear tire 16, and the right rear tire 18 are disposed in four directions of the vehicle body 11 and come into contact with a road surface. The left front tire 12, the right front tire 14, the left rear tire 16, and the right rear tire 18 transmit a drive force onto the road surface by being rotated by the drive source and the power transmission unit and move the vehicle body 11 with respect to the road surface.

The braking device 20 has a brake pedal 21 operated by a driver, a brake booster means (brake booster) 22 which boosts a pedal depression force input to the brake pedal 21, a master cylinder 23 which converts the pedal depression force boosted by the brake booster means 22 to fluid pressure (hydraulic pressure) of a brake fluid, a first hydraulic pipe 24 and a second hydraulic pipe 26 which distribute the hydraulic pressure supplied from the master cylinder 23, and hydraulic braking units 28_{lf}, 28_{rf}, 28ₗᵣ, 28ᵣᵣ which are disposed corresponding to the respective tires and generate braking forces by hydraulic pressure supplied from the first hydraulic pipe 24 and hydraulic pressure supplied from the second hydraulic pipe 26. Note that the first hydraulic pipe 24 is connected to the hydraulic braking unit 28_{lf} and to the hydraulic braking unit 28ᵣᵣ. Further, the second hydraulic pipe 26 is connected to the hydraulic braking unit 28_{rf} and to the hydraulic braking unit 28ₗᵣ.

Here, the hydraulic braking unit 28_{lf} applies a braking force to the left front tire 12, the hydraulic braking unit 28_{rf} applies a braking force to the right front tire 14, the hydraulic braking unit 28ₗᵣ applies a braking force to the left rear tire 16, and the hydraulic braking unit 28ᵣᵣ applies a braking force to the right rear tire 18. The hydraulic braking unit 28_{lf} has a wheel cylinder 30_{lf} which is supplied with hydraulic pressure from the master cylinder 23 via the first hydraulic pipe 24, a brake rotor 32_{lf} which is rotated together with the wheel (the left front tire 12), and a brake pad 34_{lf} which is supported by the vehicle body 11 so as not to rotate, whose position is changed by the wheel cylinder 30_{lf}, and which comes into contact with the brake rotor 32_{lf} in braking. The hydraulic braking unit 28_{lf} is configured as described above, and when the hydraulic braking unit 28_{lf} is supplied with higher hydraulic pressure (hydraulic pressure in braking) from the master cylinder 23, the wheel cylinder 30_{lf} moves the brake pad 34_{lf} in a direction where the brake pad 34_{lf} is pressed to the brake rotor 32_{lf}. With the operation, the brake pad 34_{lf} and the brake rotor 32_{lf} come into contact with each other and apply a force to the brake rotor 32_{lf} in a direction where a rotation of the brake rotor 32_{lf} is stopped. As described above, the hydraulic braking unit 28_{lf} applies a braking force to the tire disposed in confrontation therewith by the hydraulic pressure supplied from the master cylinder 23.

Next, the hydraulic braking units 28_{rf}, 28ₗᵣ, and 28ᵣᵣ basically have the same configuration as the hydraulic braking unit 28_{lf} except that disposing positions (tires disposed corresponding to the hydraulic braking units) are different. In the hydraulic braking unit 28_{rf}, a position of a wheel cylinder 30_{rf} is varied by hydraulic pressure supplied from the second hydraulic pipe 26, and, in braking, high hydraulic pressure is supplied from the second hydraulic pipe 26 to the wheel cylinder 30_{rf} and a brake pad 34_{rf} and a brake rotor 32_{rf} are caused to come into contact with each other to thereby apply a braking force to the right front tire 14. In the hydraulic braking unit 28ₗᵣ, the position of a wheel cylinder 30ₗᵣ is varied by hydraulic pressure supplied from the second hydraulic pipe 26, and, in braking, high hydraulic pressure is supplied from the second hydraulic pipe 26 to the wheel cylinder 30ₗᵣ and a brake pad 34ₗᵣ and a brake rotor 32ₗᵣ are caused to come into contact with each other to thereby apply a braking force to the left rear tire 16. In the hydraulic braking unit 28ᵣᵣ, a position of a wheel cylinder 30ᵣᵣ is varied by hydraulic pressure supplied from the first hydraulic pipe 24, and, in braking, high hydraulic pressure is supplied from the first hydraulic pipe 24 to the wheel cylinder 30ᵣᵣ and a brake pad 34ᵣᵣ and a brake rotor 32ᵣᵣ are caused to come into contact with each other to thereby apply a braking force to the right rear tire 18.

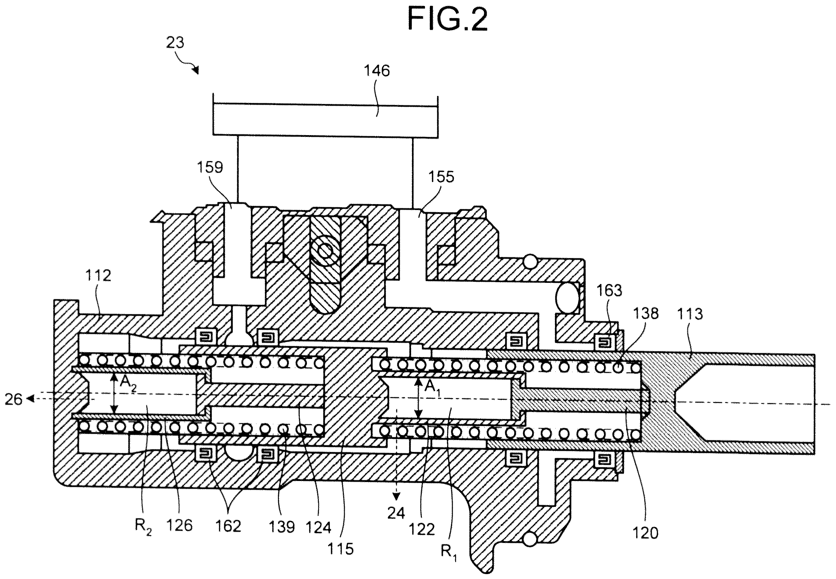

Next, the master cylinder 23 will be explained using FIG. 2. Here, FIG. 2 is a schematic view illustrating a schematic configuration of the master cylinder of the braking device. As illustrated in FIG. 2, the master cylinder 23 has a cylinder 112, an input piston 113, a pressurizing piston 115, a first spring 138, a second spring 139, and a reservoir tank 146.

The cylinder 112 is formed in a cylindrical shape with an open base end section and a closed extreme end section and has the input piston 113 and the pressurizing piston 115 disposed therein coaxially and supported so as to be free to move along an axis direction.

An outer peripheral surface of the input piston 113 is movably supported on an inner peripheral surface of the cylinder 112 which forms a cylindrical shape. The input piston 113 has the brake booster means 22 coupled with a base end section (base end side of the cylinder 112). Further, the input piston 113 is disposed with a cylindrical section, which is located on an extreme end and whose outer peripheral surface is in contact with the cylinder 112, and a first piston 120 which disposed inside of the cylindrical section. The first piston 120 has a disc which is disposed to an extreme end and has a diameter larger than the other section. That is, the first piston 120 is formed in such a shape that an end of a rod-like member on one side is coupled with the base end section of the input piston 113 and the disc is disposed to an end thereof on the other side.

The pressurizing piston 115 is disposed on the extreme end section side of the input piston 113 in the cylinder 112 and an outer peripheral surface thereof is movably supported by an inner peripheral surface of the cylinder 112. The pressurizing piston 115 is provided with a first cylinder 122 on the input piston 113 side. The first cylinder 122 is a cylindrical member, and the extreme end section of the first piston 120, that is, the disc is inserted into the first cylinder 122. Further, the first cylinder 122 has an inside diameter of the cylinder approximately the same as the disc of the first piston 120 and further an end thereof on the input piston 113 side has a diameter smaller than the other section. That is, the first cylinder 122 is formed in such a shape that the extreme end section of the first piston 120 is not extracted therefrom. As described above, a space formed by a region of the first cylinder 122 on the base end side and the first piston 120 becomes a first chamber R₁. Note that an area of the first chamber R₁ in a direction orthogonal to an axis thereof, that is, an open area of the first cylinder 122 becomes an open area A₁. Further, the first chamber R₁ is connected to the first hydraulic pipe 24 via a not illustrated pipe.

Next, an extreme end side of the pressurizing piston 115 has a shape approximately the same as an extreme end section side of the input piston 113, and the pressurizing piston 115 is disposed with a cylindrical section whose outer peripheral surface is in contact with the cylinder 112 and a second piston 124 disposed inside of the cylindrical section. The second piston 124 is provided also with a disc which is disposed to an extreme end thereof and whose diameter is larger than the other section.

Next, a second cylinder 126 is disposed to a base end section inside of the cylindrical cylinder 112, that is, to a section toward the pressurizing piston 115. The second cylinder 126 is a cylindrical member and the extreme end section of the second piston 124, that is, the disc is inserted into the second cylinder 126. Note that the second cylinder 126 is fixed to the cylinder 112. Further, the second cylinder 126 has also an inside diameter of the cylinder approximately the same as the disc of the second piston 124 and further an end section thereof on the pressurizing piston 115 side has a diameter smaller than the other section. That is, the second cylinder 126 is formed in such a shape that the extreme end of the second piston 124 is not extracted therefrom. As described above, a space formed by a region of the second cylinder 126 on the base end side and the second piston 124 becomes a second chamber R₂. Note that an area of the second chamber R₂ in a direction orthogonal to an axis thereof, that is, an open area of the second cylinder 126 becomes an open area A₂. Note that, in the embodiment, the open area A₂ becomes the same area as the open area A₁. The second chamber R₂ is connected to the second hydraulic pipe 26 via a not illustrated pipe.

The first spring 138 is interposed between the input piston 113 and the pressurizing piston 115. Specifically, the first spring 138 is disposed to an inner periphery of the cylindrical section of the input piston 113 and to an outer periphery of the first cylinder 122 of the pressurizing piston 115. The first spring 138 applies an urging force in a direction where the input piston 113 is away from the pressurizing piston 115 in the axis direction. The second spring 139 is interposed between the pressurizing piston 115 and the base end section of the cylinder 112. Specifically, the second spring 139 is disposed to an inner periphery of the cylindrical section of the pressurizing piston 115 and to an outer periphery of the second cylinder 126 of the cylinder 112. The second spring 139 applies an urging force in a direction where the pressurizing piston 115 is away from the base end section of the cylinder 112 in the axis direction.

The reservoir tank 146 is a tank which stores a working fluid. Further, the cylinder 112 is formed with a relief pipe 155 and a relief pipe 159. The relief pipe 155 couples a space between the input piston 113 and the pressurizing piston 115 (space in which the first spring 138 is disposed) with the reservoir tank 146. Further, the relief pipe 159 couples a space between the pressurizing piston 115 and the cylinder 112 (space in which the second spring 139 is disposed) with the reservoir tank 146. With the configuration, the working fluid is supplied to the two spaces in the cylinder 112.

Further, two seal members 163 are disposed to a contact section of the input piston 113 and the cylinder 112 so as to sandwich a section where the relief pipe 155 supplies the working fluid to the spaces described above in the axis direction. The seal members 163 suppress a leakage of the working fluid from between the input piston 113 and the cylinder 112. Two seal members 162 are disposed to a contact section of the pressurizing piston 115 and the cylinder 112 so as to sandwich a section where the relief pipe 159 supplies the working fluid to the spaces described above in the axis direction. The seal members 162 suppress a leakage of the working fluid from between the pressurizing piston 115 and the cylinder 112.

The master cylinder 23 is configured as described above, and when an occupant depresses the brake pedal 21, an operation force (depression force) of the brake pedal 21 is transmitted to the brake booster means 22, boosted by the brake booster means 22, and transmitted to the master cylinder 23. In the master cylinder 23, when the input piston 113 moves forward against the urging force of the first spring 138, the first chamber R₁ is pressurized. Thus, a hydraulic pressure of the first chamber R₁ is ejected to the first hydraulic pipe 24.

Further, when the input piston 113 moves forward, the input piston 113 presses the pressurizing piston 115 via the first spring 138 and the first chamber R₁, and the pressurizing piston 115 moves forward against the urging force of the second spring 139. Thus, the second chamber R₂ is pressurized, and hydraulic pressure of the second chamber R₂ is ejected to the second hydraulic pipe 26.

The vehicle 10 is configured as described above, and when the occupant depresses the brake pedal 21, hydraulic pressure is ejected from the master cylinder 23 to the first hydraulic pipe 24 and the second hydraulic pipe 26. With the operation, the hydraulic pressure ejected from the first chamber R₁ of the master cylinder 23 is supplied to the hydraulic braking unit 28_{lf} and to the hydraulic braking unit 28ᵣᵣ via the first hydraulic pipe 24. The hydraulic pressure ejected from the second chamber R₂ of the master cylinder 23 is supplied to the hydraulic braking unit 28_{rf} and to the hydraulic braking unit 28ₗᵣ via the second hydraulic pipe 26. Since the hydraulic pressure is ejected from the master cylinder 23 to the respective hydraulic braking units as described above, the brake pads come into contact with the brake rotors of the respective hydraulic braking units, and braking forces are applied to the tires. With the operation, the vehicle 10 is decelerated and stopped.

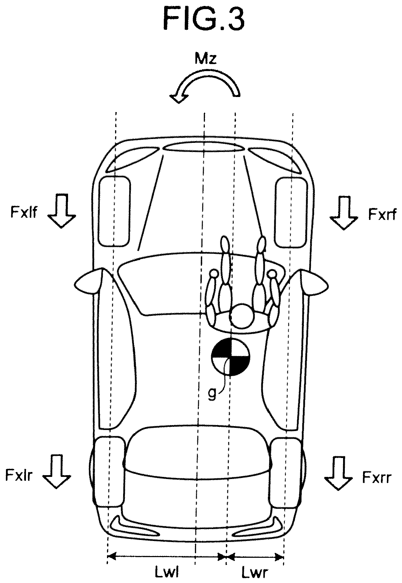

As described above, in the vehicle 10, the braking forces are applied to the respective tires by the braking device 20. Here, FIG. 3 is an explanatory view explaining a force applied to the vehicle body in braking. That is, as illustrated in FIG. 3, the left front tire 12 is applied with a braking force Fxlf by the hydraulic braking unit 28_{lf}, the right front tire 14 is applied with a braking force Fxrf by the hydraulic braking unit 28_{rf}, the left rear tire 16 is applied with a braking force Fxlr by the hydraulic braking unit 28ₗᵣ and, and the right rear tire 18 is applied with a braking force Fxrr by the hydraulic braking unit 28ᵣᵣ. Note that, in braking, larger braking forces are applied to the front wheels. That is, the braking force Fxlf and the braking force Fxrf become forces larger than the braking force Fxlr and the braking force Fxrr. Here, the braking force F can be calculated based on a pressure receiving area of a brake pad, a rotor diameter (diameter of a brake rotor), a friction coefficient (friction coefficient between a brake pad and a brake rotor, µ), a magnitude of hydraulic pressure, and a tire diameter. Specifically, the braking force F can be calculated by F = ((pressure receiving area of brake pad) × (rotor diameter) × (friction coefficient) × (hydraulic pressure) × 2) / (tire diameter).

Here, as illustrated in FIG. 3, a center of gravity g of the vehicle 10 in a state that a driver gets in the vehicle is located at a position offset to a right side (right tire side) from a center (central position) in a direction orthogonal to a travel direction. Accordingly, in the direction orthogonal to the travel direction, a distance between the left tires (the left front tire 12 and the left rear tire 16) and the center of gravity g becomes Lwl, and a distance between the right tires (the right front tire 14 and the right rear tire 18) and the center of gravity g becomes Lwr. Here, a relation between the distance Lwl and the distance Lwr becomes Lwr < Lwl.

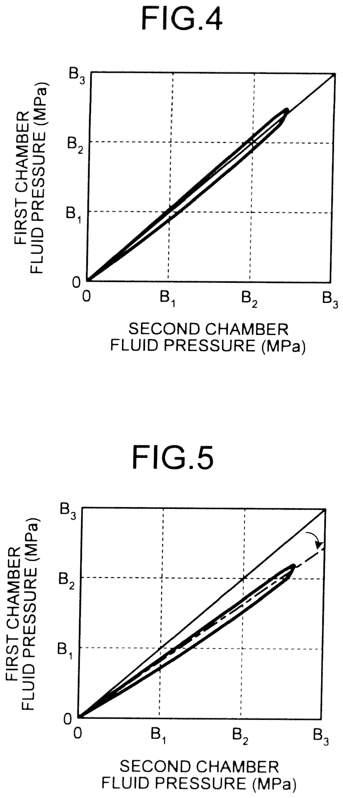

Next, FIG. 4 is a graph illustrating an example of a relation between the first chamber fluid pressure and the second chamber fluid pressure. Note that, in the graph illustrated in FIG. 4, a horizontal axis illustrates fluid pressure (hydraulic pressure) [MPa] of the second chamber and a vertical axis illustrates fluid pressure (hydraulic pressure) [MPa] of the first chamber. The graph illustrated in FIG. 4 is a graph illustrating a relation between fluid pressure generated in the first chamber R₁ and fluid pressure generated in the second chamber R₂, that is, a relation between hydraulic pressure ejected to the first hydraulic pipe 24 and hydraulic pressure ejected to the second hydraulic pipe 26 when pressure is input to the master cylinder 23. Further, a thick line illustrates an example of a pressure change when the brake pedal 21 is actually depressed and then released. In the graph illustrated in FIG. 4, fluid pressure generated in the first chamber R₁ and the fluid pressure generated in the second chamber R₂ are set to become approximately the same pressure.

Here, as illustrated in FIG. 3, when the vehicle 10 whose center of gravity g is not located at the center, that is, the vehicle 10 whose center of gravity g is offset in a direction applies a brake by the master cylinder 23 which generates the fluid pressure illustrated in FIG. 4, a rotation moment Mz is generated. Here, the rotation moment Mz is shown by Mz = (Fxlf + Fxlr) × Lwl - (Fxrf + Fxrr) × Lwr. Here, since (Fxlf + Fxlr) = (Fxrf + Fxrr) is established, a component of (Fxlf + Fxlr) × Lwl having a long distance becomes larger and the moment is generated. Note that a larger offset distance of the center of gravity g generates a larger moment. When the moment is generated as described above, the vehicle 10 is deflected in braking. That is, the vehicle 10 is turned.

In contrast, the vehicle 10 of the embodiment supplies fluid pressure illustrated in FIG. 5. Here, FIG. 5 is a graph illustrating another example of the relation between the first chamber fluid pressure and the second chamber fluid pressure. Note that, in the graph illustrated in FIG. 5, a horizontal axis illustrates second chamber fluid pressure (hydraulic pressure) [MPa] and a vertical axis illustrates first chamber fluid pressure (hydraulic pressure) [MPa]. As illustrated in FIG. 5, the vehicle 10 is set such that the second chamber R₂ supplies fluid pressure higher than the first chamber R₁. As illustrated in FIG. 5, the vehicle 10 can make the braking force Fxrf and the braking force Fxlr relatively larger than the braking force Fxlf and the braking force Fxrr by generating hydraulic pressure by the master cylinder 23. With the operation, since a component of (Fxrf + Fxrr) × Lwr can be made larger and a component of (Fxlf + Fxrl) × Lwl can be made smaller, the generated rotation moment Mz can be made small. Further, the rotation moment Mz can be made smaller and can be ideally made to 0 by setting a fluid pressure difference so as to satisfy (Fxrf + Fxrr) × Lwr = (Fxlf + Fxlr) × Lwl.

As described above, the vehicle 10 and the braking device 20 can reduce the rotation moment Mz which is generated in braking by making a difference between the fluid pressure generated in the first chamber R₁ and the fluid pressure generated in the second chamber R₂ so that it can be suppressed that the vehicle 10 is deflected in braking. Further, the vehicle 10 and the braking device 20 generate a difference between braking forces generated by a mechanical structure (that is, as a setting of reference, that is, as an initial setting). Accordingly, the rotation moment Mz can be reduced even in a time zone in which a braking force cannot be controlled when the braking force is adjusted using a sensor and the like, that is, the rotation moment Mz can be reduced at a beginning of braking (during a period from a time at which an arithmetic operation starts when braking starts to a time at which the braking force begins to be controlled).

Note that in the embodiment, although the rotation moment Mz is calculated from the braking forces of the four wheels which configure the vehicle and the fluid pressure difference for suppressing the rotation moment Mz, which is generated when the driver gets in the vehicle, is calculated, the fluid pressure difference for suppressing the rotation moment Mz may be calculated only by the front wheels in which braking forces become larger. That is, a relation of braking forces, by which Fxlf × Lwl = Fxrf × Lwr is established, may be calculated using an expression Mz = Fxlf × Lwl - Fxrf × Lwr and the fluid pressure difference may be set based on the relation.

Note that when a spring load of the first spring 138 is shown by G₁, a spring load of the second spring 139 is shown by G₂, a sliding resistance between the pressurizing piston 115 and the cylinder 112 is shown by N₂, and an area of the first cylinder 122 and the second cylinder 126 is shown by A, the fluid pressure difference between the first chamber and the second chamber can be calculated by fluid pressure difference ((first chamber fluid pressure) - (second chamber fluid pressure)) = (G₂ - G₁ + N₂) / A. That is, the fluid pressure difference can be adjusted by the spring loads of the first spring 138 and the second spring 139, and the sliding resistance between the pressurizing piston 115 and the cylinder 112.

Further, in the embodiment, although an open area A₁ of the first cylinder 122 and an open area A₂ of the second cylinder 126 are set to the same area, the fluid pressure difference can be adjusted also by two open areas. Note that various methods can be used as a method of making a difference between the fluid pressure generated in the first chamber R₁ of the master cylinder 23 and the fluid pressure generated in the second chamber R₂ thereof.

Here, in the embodiment, although the fluid pressure difference generated between the first chamber and the second chamber, that is, a difference between a braking force generated in the right tires of the vehicle and a braking force generated in the left tires of the vehicle (hereinafter, called "a braking force difference") is determined assuming a state that only the driver gets in the vehicle, that is, a state that only one person gets in the vehicle, it is preferable to calculate the braking force difference assuming various positions of the center of gravity. The generated rotation moment can be reduced in any state of use by setting the braking force difference assuming various positions of the center of gravity, that is, various states of use. Here, when the braking force difference is calculated assuming the various positions of the center of gravity, it is preferable to set the braking force difference so that a generated rotation moment is within a set range. With the operation, the rotation moment generated in braking can be set within a predetermined range (approximately the same) in any case. As a result, travelling can be performed under the same condition regardless of a state of use.

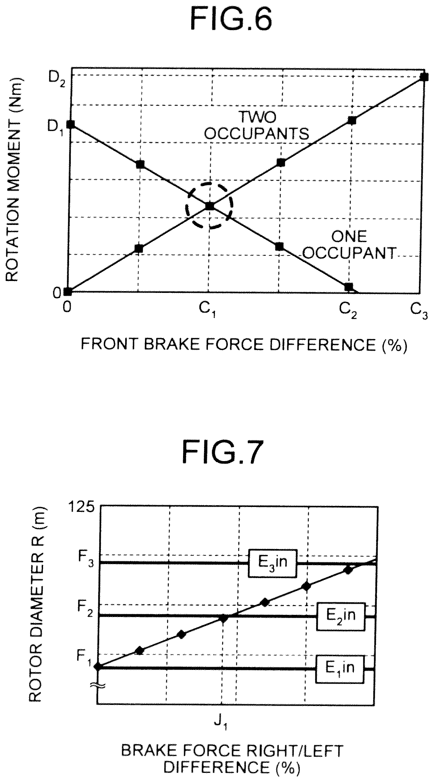

This will be specifically explained below using FIG. 6. FIG. 6 is a graph illustrating another example of a relation between a rotation moment and a front braking force difference. Note that in the graph illustrated in FIG. 6, a horizontal axis illustrates a front braking force difference [%] and a vertical axis illustrates a rotation moment [Nm]. Note that the example illustrated in FIG. 6 is a case that two persons who get in the vehicle have an approximately same body weight. Further, in FIG. 6, a relation between a front braking force difference and a rotation moment generated in each braking force difference is calculated as to a case that one person gets in the vehicle 10 (a state that the driver gets in the vehicle) and as to a case that two persons get in the vehicle 10 (a state that the driver and a passenger get in the vehicle). That is, in the graph illustrated in FIG. 6, when the one person gets in the vehicle, a generated rotation moment can be set near to 0 by setting the front braking force difference to about C₂%, and when the front braking force difference is set to 0%, the rotation moment is generated in an amount of D₁ Nm or more. Further, when the two persons get in the vehicle, the rotation moment can be set near to 0 by setting the front braking force difference to 0%, and when the front braking force difference is set to C₃%, the rotation moment is generated in an amount of about D₂ Nm. Note that, in the embodiment, since the body weights of the two persons are assumed to be the approximately same body weight as described above, when the two persons get in the vehicle, although the rotation moment becomes 0 by setting the braking force difference to 0, when the body weights of the two persons are different, the rotation moment may be generated even if the braking force difference is set to 0.

In the case, it is preferable that the vehicle 10 sets the braking force difference to C₁%. When the braking force difference is set to C₁%, the rotation moment generated in braking can be made to the same magnitude even in a state that the one person (only the driver) gets in the vehicle and in a state that the two persons (the driver and one more person) gets in the vehicle. As a result, a generation of deflection of the vehicle can be reduced in any state of use of the vehicle (vehicle occupied state). That is, it can be suppressed that a large rotation moment is generated in a certain state of use. Note that C₁%, C₂%, and C₃% are values which change depending on a body weight of an occupant, and a vehicle (weight and shape). Note that, the vehicle 10 is preferably set to C₁% that is the braking force difference calculated assuming that an occupant has a standard body weight. A change of generated amount of the rotation moment can be suppressed to a certain degree by using the standard state as a reference.

Further, in the vehicle 10, it is preferable to set the braking force difference by which the rotation moment becomes approximately the same value (or to the same value) when the one person gets in the vehicle and when the two persons get in the vehicle. When the case that the one person gets in the vehicle and the case that the two persons get in the vehicle are added, there can be assumed a case that the same number of persons sit on a right side and a left side of the vehicle and a case that a number of occupants sit on any one side of the right side and the left side is different from a number of persons sit on the other side by one person. As a result, when three persons get in the vehicle and when four persons get in the vehicle, since the center of gravity is balanced approximately similarly, a state of use in which a large rotation moment is generated can be suppressed from being generated.

Here, although the vehicle 10 and the braking device 20 of the embodiment are configured such that when a brake operation is input, the fluid pressure of the second chamber generated in the master cylinder 23 becomes higher than the fluid pressure of the first chamber, the vehicle 10 and the braking device 20 of the embodiment are not limited thereto. In the vehicle 10 and the braking device 20, when a difference is made between braking forces by the fluid pressure difference and the hydraulic pressure difference supplied from the master cylinder 23, it is preferable to connect the respective fluid chambers and the hydraulic braking unit so that a fluid chamber nearer to the input piston 113 becomes a fluid chamber having a higher fluid pressure. That is, it is preferable to dispose a fluid pressure chamber which is required to generate the higher fluid pressure to a side nearer to the input piston. With the configuration, in structure, since a fluid pressure chamber, in which a fluid pressure easily becomes high, can be used as the fluid pressure chamber in which the higher fluid pressure is generated, the high fluid pressure can be generated in the pertinent fluid pressure chamber by a simpler configuration. Note that the fluid pressure chamber in which the higher fluid pressure is generated is basically a fluid pressure chamber which supplies fluid pressure applied to a tire on a side near to the center of gravity among the front wheels of the vehicle.

Further, in the embodiment, although the braking force difference is provided by the fluid pressure difference and the hydraulic pressure difference supplied from the master cylinder because control is easy and an influence on a vehicle balance can be reduced, the embodiment is not limited thereto. The braking force difference can be generated by differently setting various conditions which influence a braking force on a right side and on a left side (on sides near to and far from the center of gravity in the direction orthogonal to the travel direction). Specifically, the braking force difference can be generated by setting the pressure receiving area of the brake pad, the rotor diameter, the friction coefficient, and the tire diameter to different values on the right side and on the left side. Note that when the tire diameter is set to a different tire diameter, since a traveling property is deteriorated, it is preferable to adjust the items other than the tire diameter.

This will be explained below using a specific example. Here, FIG. 7 is a graph illustrating another example of a relation between a rotor diameter and a braking force right/left difference. Note that, in the graph illustrated in FIG. 7, a horizontal axis illustrates a braking force right/left difference [%] and a verticlal axis illustrates a rotor diameter [mm]. Note that the rotor diameter is an effective radius, and the effective radius of a brake rotor of E₁ inch becomes F₁ mm. Here, FIG. 7 is a graph illustrating a relation between a rotor diameter and a generated braking force right/left difference when the brake rotor of E₁ inch is used to a brake rotor on one side. Note that FIG. 7 illustrates rotor diameters of brake rotors on the other side of E₁ inch (rotor diameter F₁ mm), E₂ inch (rotor diameter F₂ mm), and E₃ inch (rotor diameter F₃ mm) by thick lines, respectively. As illustrated in FIG. 7, the braking force difference can be generated by setting the rotor diameter to the different diameters and further can be made to various braking force differences.

As illustrated in, for example, FIG. 7, when the braking force right/left difference is set so that it is generated in J₁%, it is sufficient to use a brake rotor of (a hydraulic braking unit) of one of the right and left tires as the brake rotor of E₁ inch and to use a brake rotor of (a hydraulic braking unit) of the other of the right and left tires as the brake rotor of E₂ inch. As described above, the right/left braking force difference can be also generated by setting the right and left brake rotors to a different diameter.

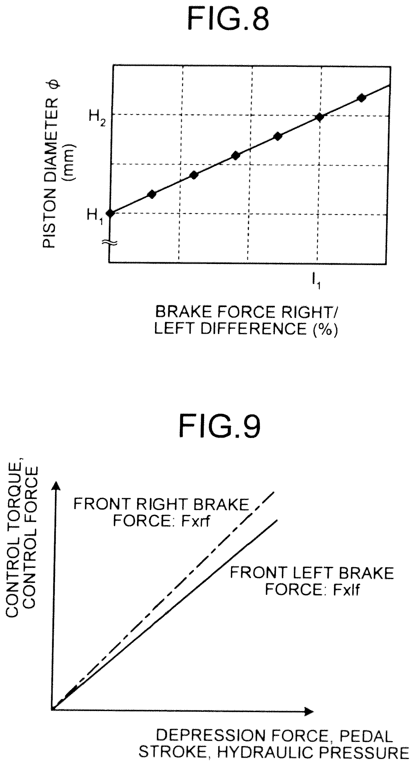

Next, FIG. 8 is a graph illustrating another example of a relation between the piston diameter and the braking force right/left difference. Note that, in the graph illustrated in FIG. 8, a horizontal axis illustrates a braking force right/left difference [%] and a vertical axis illustrates a piston diameter [mm]. Note that the piston diameter is a diameter of the pressure receiving area of the brake pad (may be a brake shoe). Here, FIG. 8 is a graph illustrating a relation between the piston diameter and a generated braking force right/left difference when a brake pad of a piston diameter of H₁ mm is used to a brake pad on one side. As illustrated in FIG. 8, the braking force difference can be generated by setting the piston diameter to a different diameter and further can be made to various braking force differences.

As illustrated in, for example, FIG. 8, when the braking force right/left difference is set so that it is generated in I₁%, it is sufficient to set a piston diameter of a brake pad of (a hydraulic braking unit of) a tire of right and left tires to H₁ mm and to set a piston diameter of a brake pad of (a hydraulic braking unit of) the other tire of the right and left tires to H₂ mm. As described above, the right/left braking force difference can be also generated by setting the brake pads to a different diameter on the right side and on the left side.

Further, the embodiment is not limited also to the above mentioned, and the braking force difference can be generated by using a different material to the right and left brake pads and setting the friction coefficient of the above expression to a different value. Further, when a hydraulic pressure to be supplied is changed, what is used to change the hydraulic pressure is not limited to the master cylinder, and a difference may be generated to hydraulic pressures supplied to the respective hydraulic braking unit by disposing a valve to the first hydraulic pipe 24, the second hydraulic pipe 26, for example, an outlet of the master cylinder, an inlet of the wheel cylinder.

Further, in the embodiment, although the braking force difference is generated by the mechanical structure as the initial setting, the embodiment is not limited thereto. When, for example, the brake is electrically controlled based on an input signal (an amount of depression of the brake pedal and the like), it is sufficient to set calculated right/left braking forces to different values based on the input signal. This will be explained using FIG. 9. Here, FIG. 9 is a graph illustrating a relation of an output and an input. Note that, in the graph illustrated in FIG. 9, a horizontal axis illustrates an input and a vertical axis illustrates an output. Note that, as the input, there are available a force for depressing the brake pedal (depression force), an amount of movement of the brake pedal (pedal stroke), a hydraulic pressure generated by an operation (hydraulic pressure), and the like. Further, as the output, there is available torque applied as the braking force (control torque) and a force (control force) applied as the braking force.

In the relation illustrated in the graph of FIG. 9, even if there is the same input, the braking force (control torque) Fxlf of the front left tire and the braking force (control torque) Fxrf of the front right tire is set to a different value. Further, the braking force Fxlf of the front left tire becomes smaller than the braking force Fxr of the front right tire at a certain ratio. As a result, the right/left braking force difference can be generated. As described above, it can be prevented that the vehicle is deflected in braking likewise the above mentioned by making a difference to right and left outputs to be calculated based on a necessary braking force difference. Further, as described above, also when the braking force is controlled by the calculated value, the value is calculated based on a previously calculated relation in place of a detected value of a sensor and the like, that is, the value is calculated in a state that braking forces have a difference at all times. Accordingly, even in abrupt braking and the like, a difference can be generated to the braking forces.

### Industrial Applicability

As described above, the braking device and the vehicle according to the present invention are useful to decelerate a vehicle during travelling.

### Reference Signs List

- 10: VEHICLE
- 11: VEHICLE BODY
- 20: BRAKING DEVICE
- 23: MASTER CYLINDER
- 24: FIRST HYDRAULIC PIPE
- 26: SECOND HYDRAULIC PIPE
- 28_{lf}, 28_{rf}, 28ₗᵣ, 28ᵣᵣ: HYDRAULIC BRAKING UNIT

## Claims

1. A vehicle (10) comprising:
a vehicle body (11);
a first tire rotatably disposed on a side far from a center of gravity of the vehicle body (11);
a second tire rotatably disposed on a side near to the center of gravity of the vehicle body (11); and
a braking device (20) configured to exert a braking force on the vehicle body (11), wherein
the braking device (20) includes
a master cylinder (23) including a first fluid pressure chamber and a second fluid pressure chamber that supply fluid pressure,
a first hydraulic braking unit configured to apply a braking force to the first tire based on the fluid pressure supplied from the first fluid pressure chamber, and
a second hydraulic braking unit configured to apply a braking force to the second tire based on the fluid pressure supplied from the second fluid pressure chamber,
the pressure of the second fluid pressure chamber is configured to become higher than the pressure of the first fluid pressure chamber, and
in a state that a driver gets in the vehicle (10), the braking force on the side near to the center of gravity is set larger than the braking force on the side far from the center of gravity in a direction orthogonal to a traveling direction of the vehicle body (11),
**characterized in that** the braking device (20) is configured to set the braking force on the side near to the center of gravity and the braking force on the side far from the center of gravity to a difference of braking forces in which a generated rotation moment is within a set range, based on a difference of braking forces calculated under a condition of a plurality of positions of the center of gravity.

2. The vehicle (10) according to claim 1, wherein the braking device (20) sets the braking force on the side near to the center of gravity and the braking force on the side far from the center of gravity to a proportional relation.

3. The vehicle (10) according to claim 1 or 2, wherein
the master cylinder (23) includes a first piston (120) and a first cylinder (122) that configure the first fluid pressure chamber, a first spring (138) that supports the first piston (120), a second piston (124) and a second cylinder (126) that configure the second fluid pressure chamber, and a second spring (139) that supports the second piston (124),
the pressure of the second fluid pressure chamber is made higher than the pressure of the first fluid pressure chamber based on at least one of spring loads of the first spring (138) and the second spring (139), sliding resistances of the respective units, and areas of the first cylinder (122) and the second cylinder (126).

4. The vehicle (10) according to any one of claims 1 to 3, wherein the first tire and the second tire are located forward in the traveling direction of the vehicle body (11).

5. The vehicle (10) according to any one of claims 1 to 4, wherein
the braking device (20) includes a first brake rotor that applies a braking force to the first tire and a second brake rotor that applies a braking force to the second tire, and
the second brake rotor has a rotor diameter larger than that of the first brake rotor.

6. The vehicle (10) according to any one of claims 1 to 5, wherein
the braking device (20) calculates a braking force calculated to an input value input during braking so that a braking force on the side near to the center of gravity becomes larger than a braking force on the side far from the center of gravity, and
the calculated braking force is exerted on the vehicle body (11).

## Patentansprüche

1. Fahrzeug (10), umfassend:
eine Fahrzeugkarosserie (11),
einen ersten Reifen, der drehbar an einer Seite fern von einem Schwerpunkt der Fahrzeugkarosserie (11) angeordnet ist,
einen zweiten Reifen, der drehbar an einer Seite nahe dem Schwerpunkt der Fahrzeugkarosserie (11) angeordnet ist, und
eine Bremsvorrichtung (20), die dazu ausgestaltet ist, eine Bremskraft auf die Fahrzeugkarosserie (11) auszuüben, wobei
die Bremsvorrichtung (20) beinhaltet
einen Hauptzylinder (23), der eine erste Fluiddruckkammer und eine zweite Fluiddruckkammer beinhaltet, die Fluiddruck liefern,
eine erste hydraulische Bremseinheit, die dazu ausgestaltet ist, auf Grundlage des Fluiddrucks, der von der ersten Fluiddruckkammer geliefert wird, eine Bremskraft auf den ersten Reifen auszuüben, und
eine zweite hydraulische Bremseinheit, die dazu ausgestaltet ist, auf Grundlage des Fluiddrucks, der von der zweiten Fluiddruckkammer geliefert wird, eine Bremskraft auf den zweiten Reifen auszuüben,
wobei der Druck der zweiten Fluiddruckkammer dazu ausgestaltet ist, höher als der Druck der ersten Fluiddruckkammer zu werden, und
in einem Zustand, in dem sich ein Fahrer in dem Fahrzeug (10) befindet, die Bremskraft auf der Seite nahe dem Schwerpunkt, in einer Richtung orthogonal auf eine Fahrtrichtung der Fahrzeugkarosserie (11), größer eingestellt wird als die Bremskraft auf der Seite fern dem Schwerpunkt,
**dadurch gekennzeichnet, dass** die Bremsvorrichtung (20) dazu ausgestaltet ist, die Bremskraft auf der Seite nahe dem Schwerpunkt und die Bremskraft auf der Seite fern dem Schwerpunkt auf eine Bremskraftdifferenz einzustellen, bei welcher ein erzeugtes Drehmoment innerhalb eines eingestellten Bereichs liegt, auf Grundlage einer Bremskraftdifferenz, die unter einer Bedingung mehrerer Positionen des Schwerpunkts berechnet wird.

2. Fahrzeug (10) nach Anspruch 1, wobei die Bremsvorrichtung (20) die Bremskraft auf der Seite nahe dem Schwerpunkt und die Bremskraft auf der Seite fern dem Schwerpunkt auf ein proportionales Verhältnis einstellt.

3. Fahrzeug (10) nach Anspruch 1 oder 2, wobei
der Hauptzylinder (23) einen ersten Kolben (120) und einen ersten Zylinder (122), welche die erste Fluiddruckkammer konfigurieren, eine erste Feder (138), die den ersten Kolben (120) trägt, einen zweiten Kolben (124) und einen zweiten Zylinder (126), welche die zweite Fluiddruckkammer konfigurieren, und eine zweite Feder (139), die den zweiten Kolben (124) trägt, beinhaltet,
der Druck der zweiten Fluiddruckkammer auf Grundlage mindestens eines von den Federlasten der ersten Feder (138) und der zweiten Feder (139), den Gleitwiderständen der jeweiligen Einheiten und den Flächen des ersten Zylinders (122) und des zweiten Zylinders (126) größer gemacht wird als der Druck der ersten Fluiddruckkammer.

4. Fahrzeug (10) nach einem der Ansprüche 1 bis 3, wobei der erste Reifen und der zweite Reifen sich in der Fahrtrichtung der Fahrzeugkarosserie (11) vorne befinden.

5. Fahrzeug (10) nach einem der Ansprüche 1 bis 4, wobei
die Bremsvorrichtung (20) eine erste Bremsscheibe, die eine Bremskraft auf den ersten Reifen ausübt, und eine zweite Bremsscheibe, die eine Bremskraft auf den zweiten Reifen ausübt, beinhaltet, und
die zweite Bremsscheibe einen größeren Scheibendurchmesser als die erste Bremsscheibe aufweist.

6. Fahrzeug (10) nach einem der Ansprüche 1 bis 5, wobei
die Bremsvorrichtung (20) eine Bremskraft berechnet, die von einem Eingabewert berechnet wird, der während des Bremsens eingegeben wird, so dass eine Bremskraft auf der Seite nahe dem Schwerpunkt größer wird als eine Bremskraft auf der Seite von dem Schwerpunkt entfernt, und
die berechnete Bremskraft auf die Fahrzeugkarosserie (11) ausgeübt wird.

## Revendications

1. Véhicule (10) comportant :
une carrosserie de véhicule (11) ;
un premier pneumatique disposé de façon rotative sur un côté éloigné d'un centre de gravité de la carrosserie de véhicule (11) ;
un deuxième pneumatique disposé de façon rotative sur un côté près du centre de gravité de la carrosserie de véhicule (11) ; et
un dispositif de freinage (20) configuré pour exercer une force de freinage sur la carrosserie de véhicule (11), dans lequel
le dispositif de freinage (20) comprend
un maître-cylindre (23) comprenant une première chambre de pression de fluide et une deuxième chambre de pression de fluide qui délivrent une pression de fluide,
une première unité de freinage hydraulique configurée pour appliquer une force de freinage sur le premier pneumatique sur la base de la pression de fluide délivrée par la première chambre de pression de fluide, et
une deuxième unité de freinage hydraulique configurée pour appliquer une force de freinage sur le deuxième pneumatique sur la base de la pression de fluide délivrée par la deuxième chambre de pression de fluide,
la pression de la deuxième chambre de pression de fluide est configurée pour devenir plus élevée que la pression de la première chambre de pression de fluide, et
dans un état où un conducteur monte dans le véhicule (10), la force de freinage sur le côté près du centre de gravité est prévue plus grande que la force de freinage sur le côté éloigné du centre de gravité dans une direction perpendiculaire à une direction de déplacement de la carrosserie de véhicule (11),
**caractérisé en ce que** le dispositif de freinage (20) est configuré pour établir la force de freinage sur le côté près du centre de gravité et la force de freinage sur le côté éloigné du centre de gravité à une différence de forces de freinage dans laquelle un moment de rotation généré est dans une plage de consigne, sur la base d'une différence de forces de freinage calculée dans une condition d'une pluralité de positions du centre de gravité.

2. Véhicule (10) selon la revendication 1, dans lequel le dispositif de freinage (20) établit la force de freinage sur le côté près du centre de gravité et la force de freinage sur le côté éloigné du centre de gravité à une relation proportionnelle.

3. Véhicule (10) selon la revendication 1 ou 2, dans lequel
le maître-cylindre (23) comprend un premier piston (120) et un premier cylindre (122) qui configurent la première chambre de pression de fluide, un premier ressort (138) qui supporte le premier piston (120), un deuxième piston (124) et un deuxième cylindre (126) qui configurent la deuxième chambre de pression de fluide, et un deuxième ressort (139) qui supporte le deuxième piston (124),
la pression de la deuxième chambre de pression de fluide est rendue plus élevée que la pression de la première chambre de pression de fluide sur la base d'au moins une de charges de ressort du premier ressort (138) et du deuxième ressort (139), de résistances de glissement des unités respectives, et de sections du premier cylindre (122) et du deuxième cylindre (126).

4. Véhicule (10) selon l'une quelconque des revendications 1 à 3, dans lequel le premier pneumatique et le deuxième pneumatique se trouvent à l'avant dans la direction de déplacement de la carrosserie de véhicule (11).

5. Véhicule (10) selon l'une quelconque des revendications 1 à 4, dans lequel
le dispositif de freinage (20) comprend un premier rotor de frein qui applique une force de freinage sur le premier pneumatique et un deuxième rotor de frein qui applique une force de freinage sur le deuxième pneumatique, et
le deuxième rotor de frein a un diamètre de rotor plus grand que celui du premier rotor de frein.

6. Véhicule (10) selon l'une quelconque des revendications 1 à 5, dans lequel
le dispositif de freinage (20) calcule une force de freinage calculée à une valeur d'entrée entrée pendant un freinage de telle sorte qu'une force de freinage sur le côté près du centre de gravité devient plus grande qu'une force de freinage sur le côté éloigné du centre de gravité, et
la force de freinage calculée est exercée sur la carrosserie de véhicule (11).
